# EUROPÄISCHE PATENTANMELDUNG

(11) **EP 0 822 638 A1**
(43) Veröffentlichungstag der Anmeldung: **04.02.1998**
(21) Anmeldenummer: 96112473.2
(22) Anmeldetag: 02.08.1996
(51) Int. Cl.: H02K 1/16

(54) **Elektrische Maschine mit Zonen zur Homogenisierung des Magnetfeldes in den Dauermagneten**

(71) Anmelder: SMH Management Services AG, CH-2501 Biel (CH)
(72) Erfinder: Jeanneret, René, 3274 Merzlingen (CH)
(74) Vertreter: Patry, Didier Marcel Pierre

(57) **Zusammenfassung**

Die erfindungsgemässe Lösung sieht in der Nähe der Dauermagnete (63a bis 63r; 179a bis 179l) und an den Luftspalt (66; 196) angrenzend eine Schicht (60; 130) aus einem Werkstoff mit einer relativen Permeabilität zwischen 1.5 und 100 vor. Bei einer Maschine mit radialem Feld ist beispielsweise ein Vetroferrit-Hohlzylinder (60) und bei einer Maschine mit axialem Feld eine Vetroferrit-Scheibe (130) vorgesehen. Die Schicht (60; 130) homogenisiert das Magnetfeld in den Dauermagneten (23a bis 23r; 179a bis 179l) um einer dortigen Bildung von Wirbelströmen entgegenzuwirken.

## Beschreibung

Die Erfindung betrifft eine elektrische Maschine nach dem Oberbegriff des Anspruchs 1.

Insbesondere ist die erfindungsgemässe Vorrichtung für schleiferlose, dauermagneterregte Generatoren und Motoren vorgesehen.

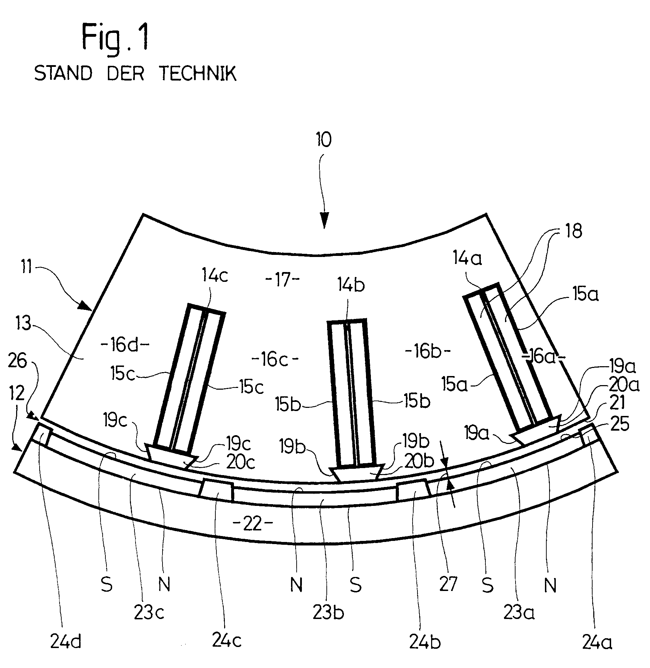

In der Figur 1 ist auf schematische Weise ein vergrösserter Ausschnitt eines konventionellen 18-poligen, dauermagneterregten Einphasen-Radialgenerators 10 in Schnittdarstellung gezeigt. Im Falle eines Dreiphasen-Generators kann beispielsweise von 54 Polen ausgegangen werden. Der Einphasen-Radialgenerators 10 weist einen Stator bzw. Ständer 11 und einen Rotor bzw. Läufer 12 aufweist, wobei die Drehachse ausserhalb der Figur liegt und somit nicht dargestellt ist. Mit 13 ist ein im wesentlichen zylindermantelförmiges, ferromagnetisches Statorblechpaket bezeichnet, welches aus einer Vielzahl von isolierten, lochscheibenförmigen Dynamoblechen besteht. Im Statorblechpaket 13 sind achtzehn in regelmässigen Abständen radial um die Drehachse angeordnete, untereinander identische Nuten 14a-r (14a bis 14r) mit jeweils zwei zueinander parallelen Nutflanken 15a-r (15a bis 15r) ausgebildet. Der in Figur 1 dargestellte Ausschnitt zeigt lediglich drei Nuten 14a-c mit den Nutflanken 15a-c. Diese Nuten können allerdings auch konisch sein.

Die Nuten 14a-r teilen das Statorblechpaket 13 in achtzehn jeweils dazwischenliegende, sogenannte Statorpole 16a-r (16a bis 16r) auf, von denen in Figur 1 nur deren vier 16a-d dargestellt sind, davon zwei nur teilweise. Die Nuten 14a-r durchdringen das Statorblechpaket 13 nicht vollständig, so dass ein innenliegender, zylindermantelförmiger Bereich entsteht, der im folgenden mit 17 bezeichnet und Verbindungsbereich genannt wird, da er die Statorpole 16a-r untereinander magnetisch verbindet.

In den Nuten 14a-r sind annähernd raumfüllend Wicklungen 18 dargestellt, die auf herkömmliche Art auf das Statorblechpaket 13 gewickelt sind. Die Bezugsziffer 18 ist zugunsten der Übersichtlichkeit stellvertretend für alle Nuten 14a-r nur bei der Nute 14a eingetragen. Im peripheren Bereich des Statorblechpaketes 13 gehen die parallelen Nutflanken 15a-r jeweils in einen konischen Nutbereich 19a-r (19a bis 19r) über, um pro Nut 14a-r einen schwalbenschwanzförmigen Nutkeil 20a-r (20a bis 20r) formschlüssig aufnehmen zu können, wobei in Figur 1 nur drei Nutkeile 20a-c dargestellt sind. Jeder Nutkeil 20a-r verschliesst seine Nut 14a-r und fixiert die darin eingeschlossene Wicklung 18. Die Nutkeile 20a-r bilden zusammen mit den Statorpolen 16a-r eine möglichst gleichmässige, zylindrische Statoroberfläche 21.

Der bezüglich der Drehachse ausserhalb des Stators 11 befindliche Rotor 12 weist einen zylindermantelförmigen Jochring 22 aus ferromagnetischem Material auf, der wie das Statorblechpaket 13 aus mehreren aufeinandergeschichteten, lochscheibenförmigen Blattlagen besteht, oder auch massiv bzw. einstückig aus beispielsweise Stahlguss sein kann. Innenseitig sind am Jochring 22 in regelmässigen Abständen achtzehn untereinander identische, flach ausgeformte Dauermagnete 23a-r (23a bis 23r) aufgeklebt, die jeweils durch diamagnetische Distanzhalteelemente 24a-r (24a bis 24r) voneinander räumlich sowie magnetisch getrennt sind. Die Dauermagnete 23a-r, die jeweils einen Nordpol N und einen Südpol S aufweisen, sind fortlaufend alternierend gepolt. Beispielsweise weist der Nordpol N des Dauermagneten 23a in Bezug auf die Drehachse nach aussen, der Südpol S hingegen zum Stator 11 hin. Die Dauermagnete 23a-r bilden zusammen mit den Distanzhalteelementen 24a-r eine zylindrische Rotoroberfläche 25. Wiederum beschränkt sich die Figur 1 auf einen Ausschnitt des Rotors 12 und zeigt nur drei Dauermagnete 23a-c und vier Distanzhalteelemente 24a-d, wobei 24a und 24d nur teilweise dargestellt sind.

Zwischen der Statoroberfläche 21 und der Rotoroberfläche 25 ist ein zylindermantelförmiger Luftspalt 26 vorhanden, dessen Breite 27 etwa 2.5mm beträgt, damit eine angemessene magnetische Kopplung bzw. ein angemessener magnetischer Übergangswiderstand zwischen Stator 11 und Rotor 12 entsteht.

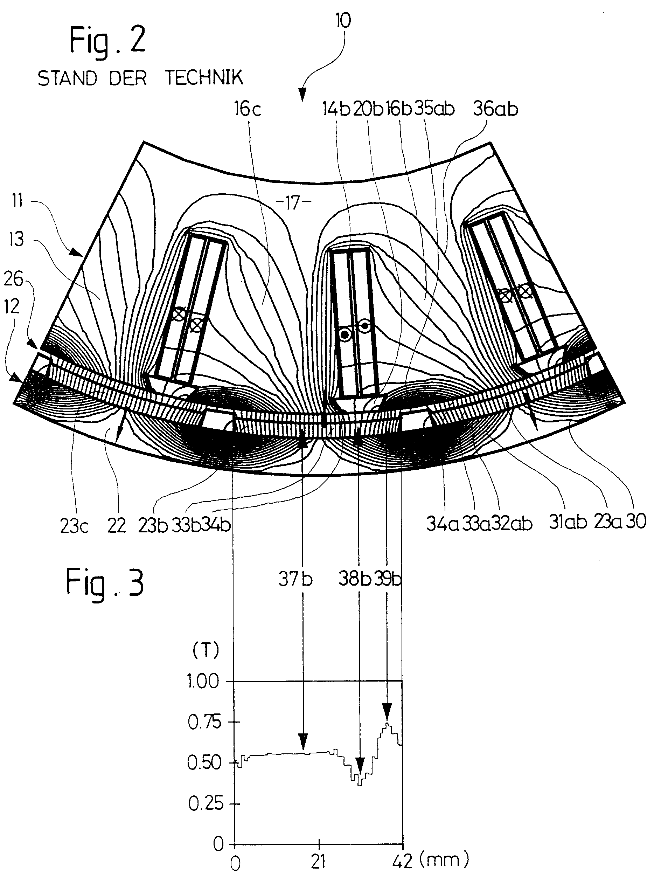

Figur 2 zeigt denselben Ausschnitt des Radialgenerators 10 wie Figur 1. Obwohl für Figur 2 dieselben Bezugszeichen gelten, sind darin nur die wichtigsten eingetragen, damit zusätzlich eingezeichnete magnetische, in sich geschlossene Feldlinien 30 deutlicher zum Ausdruck kommen. Die gezeigten Feldlinien 30, deren Dichte proportional zur jeweils lokal auftretenden magnetischen Flussdichte bzw. Induktion sind, entspringen einer auf der Infinite-Elemente-Theorie beruhenden Rechnersimulation. Figur 2 zeigt den Betriebsfall, während welchem der Rotor 12 angetrieben wird und eine Ankerrückwirkung auftritt. Es ist also nicht nur das von den Dauermagenten 23a-r ausgehende Magnetfeld eingezeichnet, sondern die Summe bzw. Überlagerung von diesem und demjenigen der Ankerrückwirkung, wobei entsprechende Feldlinien mit 30 bezeichnet sind. Im folgenden wird im wesentlichen nur auf diejenigen Feldlinien 30 eingegangen, welche von den beiden benachbarten Dauermagneten 23a und 23b ausgehen. Dasselbe gilt selbstverständlich für jeweils alle andern Paare benachbarter Dauermagnete 23b und 23c, 23c und 23d, ..., 23q und 23r, 23r und 23a ebenfalls.

In der in Figur 2 gezeigten relativen Lage des Rotors 12 gegenüber dem Stator 11 befinden sich jeweils zwei der Dauermagnete 23a-r mindestens teilweise in unmittelbarer Nähe zu einem einzigen Statorpol 16a-r, d.h. es liegen beispielsweise dem Statorpol 16b die Dauermagnete 23a und 23b gegenüber. In der gezeigten Lage des Rotors 12 geht von den beiden benachbarten, alternierend gepolten, in Serie wirkenden Dauermagneten 23a und 23b ein gemeinsamer magnetischer Fluss 31ab aus. Dieser Fluss 31ab lässt sich in verschiedene Abschnitte und Zweige aufteilen. Ein erster, kurzer Abschnitt 32ab des Flusses 31ab verläuft rotorseitig im Jochring 22 zwischen den beiden Dauermagneten 23a und 23b. In den Dauermagneten 23a und 23b selbst bildet der Fluss 31ab jeweils einen Abschnitt 33a bzw. 33b und jeweils daran anschliessend im Luftspalt 26 einen Abschnitt 34a bzw. 34b. Statorseitig teilt sich der Fluss 31ab im wesentlichen in zwei im Statorblechpaket 13 verlaufende, die Abschnitte 34a und 34b des Flusses im Luftspalt 26 untereinander verbindende Zweige auf, d.h. in einen kurzen, ausschliesslich im Statorpol 16b verlaufenden Zweig 35ab sowie in einen längeren, auch über den Verbindungsbereich 17, d.h. um die Nut 14b herum und in den Statorpol 16c führenden Zweig 36ab.

Da die Beschreibung des Radialgenerator 10 nicht nur für die Dauermagnete 23a und 23b zutrifft, sondern auch für die übrigen, benachbarten Paare 23b und 23c, 23c und 23d, ..., 23q und 23r, 23r und 23a, sind in analogem Sinn weitere Bezugszeichen definiert, nämlich insgesamt achtzehn magnetische Flüsse 31ab, 31bc, ..., 31qr, 31ra, achtzehn Abschnitte 32ab, 32bc, ..., 32qr, 32ra im Jochring 22, achtzehn Abschnitte 33a-r (33a bis 33r) in den Dauermagneten 23a-r, achtzehn Abschnitte 34a-r (34a bis 34r) im Luftspalt 26 sowie achtzehn Zweige 35ab, 35bc, ..., 35qr, 35ra und achtzehn Zweige 36ab, 36bc, ..., 36qr, 36ra im Statorblechpaket 13.

Die Feldliniendichte bzw. die Flussdichte in den Dauermagneten 23a-r ist nicht an jeder Stelle dieselbe, d.h. das Magnetfeld in den Dauermagneten 23a-r ist nicht homogen. Diese Inhomogenität hat zwei Ursachen: Als erstes beeinflussen die Nuten 14a-r sowie ihre Keile 20a-r das Magnetfeld auch im Bereich innerhalb seiner Quellen, d.h. auch innerhalb der Dauermagnete 23a-r, da diese nicht ideal, sondern mit einem magnetischen Innenwiderstand behaftet sind. Zweitens wird dieser Effekt durch die Ankerrückwirkung verstärkt, da der lentz'schen Regel entsprechend das Magnetfeld des Stromes der induzierten Spannung stets so gerichtet bzw. gepolt ist, dass es der Änderungstendenz des ursprünglichen Erregerfeldes entgegenwirkt.

Die entlang beispielsweise des Dauermagneten 23b variierende Flussdichte, auch Induktion genannt ist einerseits der Dichte der Feldlinien 30 im Abschnitt 33b der Figur 2 zu entnehmen, oder und wesentlich deutlicher dem graphischen Verlauf der Flussdichte in Funktion der jeweiligen Stelle im Dauermagnet 23b von Figur 3. Dadurch weist beispielsweise der Dauermagnet 23b in der gezeigten Drehlage des Rotors 12 tangential entlang des Luftspaltes 26 im wesentlichen drei Bereiche mit jeweils unterschiedlicher Flussdichte auf, nämlich gemäss Figur 2 und 3 einen ersten Bereich 37b mit einer ungefähr gleichmässigen Flussdichte von etwa 0.5 Tesla, einen zweiten Bereich 38b geringerer Flussdichte mit einem Minimalwert von etwa 0.3 Tesla und einen anschliessenden dritten Bereich 39b mit einer grösseren Flussdichte mit einem Maximalwert von etwa 0.7 Tesla.

Da der Verlauf der Flussdichte im Dauermagnet 23b bei Rotation des Rotors 12 wandert und sich ausserdem noch verändert, liegt eine zeitliche Änderung des Magnetfeldes im Dauermagneten 23b vor, was nach dem Induktionsgesetz bedeutet, dass im betreffenden Bereich, d.h. im Dauermagnet 23b Spannungen induziert werden, welche Wirbelströme zur Folge haben. Selbstverständlich treten diese Wirbelströme bei allen Dauermagneten 23a-r auf und es sind auch hier wiederum die entsprechenden Bereiche 37a-r (37a bis 37r), 38a-r (38a bis 38r) sowie 39a-r (39a bis 39r) definiert. Die in den Dauermagneten 23a-r auftretenden Wirbelströme können aufgrund hoher induzierter Spannungen trotz eines relativ hochohmigen Dauermagneten-Werkstoffes recht gross sein und zu einer deutlichen Erwärmung der Dauermagnete 23a-r, d.h. zu einem Energieverlust bzw. zu einer Beeinträchtigung des Wirkungsgrades des Radialgenerators 10 führen.

Zusammenfassend bewirken also die Kelle 20a-r sowie die Ankerrückwirkung eine Änderung des Magnetfeldes in den Dauermagneten 23a-r, woraus Wirbelstromverluste hervorgehen. Selbstverständlich ist dieses Phänomen nicht an einen Radialgenerator gebunden, sondern tritt grundsätzlich bei allen bewegten elektrischen Maschinen mit keilartigen Wicklungsabschlüssen auf, d.h. die besagten Wirbelstromverluste können bei allen Radial-, Axial- und Lineargeneratoren wie -motoren auftreten.

Mit dem Ziel, den Wirkungsgrad zu erhöhen, liegt der vorliegenden Erfindung die Aufgabe zugrunde, eine elektrische Maschine zu schaffen, bei welcher in den Dauermagneten möglichst geringe Magnetfeldänderungen und dadurch möglichst geringe Wirbelströme auftreten.

Die erfindungsgemässe Lösung dieser Aufgabe ergibt sich aus den Merkmalen des Anspruchs 1.

Die erfindungsgemässe Vorrichtung weist gegenüber dem Stand der Technik folgende Vorteile auf:

Da die erfindungsgemässe Lösung in der Nähe der Dauermagnete und an den Luftspalt angrenzend mindestens eine Zone aus einem Werkstoff mit einer relativen Permeabilität zwischen 1.5 und 100 vorsieht und diese Zone von mindestens einem Teil des Erregermagnetfeldes durchdrungen wird, wird das Magnetfeld in den Dauermagneten, welches sich aus dein Erregermagnetfeld und der Ankerrückwirkung zusammensetzt, homogenisiert. Dadurch entstehen in den Dauermagneten geringere Induktionsspannungen und in deren Folge kleinere Wirbelströme, d.h. kleinere Wirbelstromverluste. Die erfindungsgemässe Zone wirkt sich also positiv auf den Wirkungsgrad der elektrischen Maschine aus. Dabei ist es einerlei, ob es sich um einen Generator oder ein Motor handelt.

Der ebenerwähnte Effekt stellt sich besonders bei einer relativen Permeabilität zwischen 1.5 und 20 ein, jedoch ergeben auch Werte bis 100 und mehr brauchbare Resultate.

Vorteilhafterweise ist die erfindungsgemässe Zone als einstückige Zwischenschicht auf dem Stator vorgesehen und schliesst die Nuten gegen den Rotor hin ab, wodurch auf eine Vielzahl von herkömmlichen Nutkeilen verzichtet werden kann.

Gemäss einer ersten, bevorzugten Ausführungsform der erfindungsgemässen elektrischen Maschine ist für den Fall eines Axialgenerators oder Axialmotors als Zwischenschicht bzw. -zone eine dünne Scheibe vorgesehen. Eine zweite, bevorzugte Ausführungsform sieht für einen Radialgenerator oder einen Radialmotor einen dünnwandigen Hohlzylinder vor.

Der konstruktive Aufwand der erfindungsgemässen Zwischenschicht bzw. -zone ist gering, da sie nach einer bevorzugten Ausführungsform aus einem Stück beispielsweise aus Vetroferrit gefertigt ist.

Insbesondere ist die Montage eines Zylinders bzw. einer Scheibe aus Vetroferrit oder ferritähnlichem Werkstoff wesentlich einfacher als das Einsetzen einer Vielzahl von Nutkeilen.

Nach einer bevorzugten Ausführungsform ist der Werkstoff der Zwischenschicht Vetroferrit mit einer relativen Permeabilität von etwa 3. Dadurch kann der Luftspalt geringer ausgestaltet werden. Wird für den Luftspalt einer herkömmlichen Synchronmaschine 2.5mm angesetzt, so weist die erfindungsgemässe Maschine mit einer Vetroferritschicht von 4.5mm mit demselben magnetischen Übergangswiderstand nur noch einen Luftspalt von 1mm auf. Analog ist dies von einem ursprünglichen 2mm-Luftspalt ausgehend bei einer 3mm-Vetroferritschicht der Fall. Trotz geringerem Luftspalt erhöht sich der Luftreibungsverlust zwischen Stator und Rotor nicht, weil die Zwischenschicht wesentlich gleichmässiger bzw. glatter als die Oberfläche eines herkömmlichen Blechpaketes mit seiner Linienstruktur und mit den Keilen ist.

Die Erfindung ist nachfolgend in verschiedenen Ausführungsbeispielen erläutert, wobei auf die Zeichnungen Bezug genommen wird. Grundsätzlichen betreffen:
- die Figuren 1 bis 3 einen konventionellen 18-poligen, dauermagneterregten Radialgenerator,
- die Figuren 4 bis 6 einen erfindungsgemässen 18-poligen, dauermagneterregten Radialgenerator und
- die Figuren 7 bis 13 einen erfindungsgemässen 12-poligen, dauermagneterregten Axialgenerator. Genauer zeigen :
- Figur 1 auf schematische Weise einen vergrösserten Ausschnitt des konventionellen 18-poligen, einphasigen, dauermagneterregten Radialgenerators,
- Figur 2 den Radialgenerator von Figur 1, jedoch einschliesslich der magnetischen Feldlinien für den Betriebsfall,
- Figur 3 den graphischen Verlauf der Flussdichte (Induktion) in einem Dauermagnet des Radialgenerators von Figur 1 und 2,

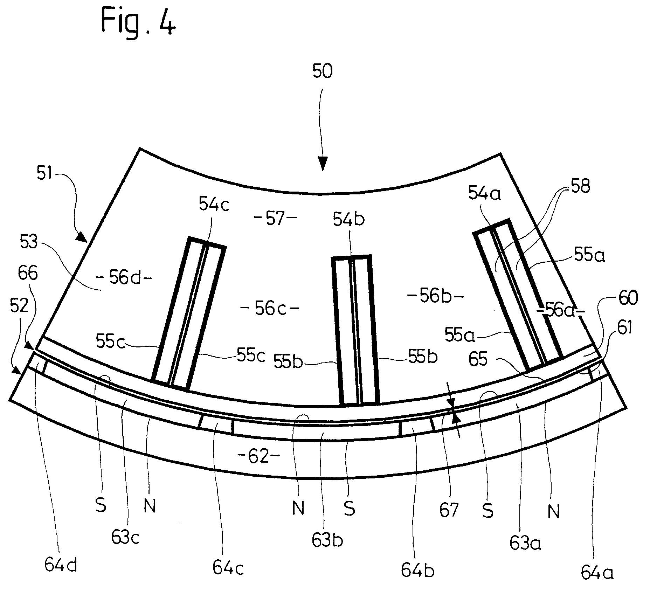

- Figur 4 auf schematische Weise einen vergrösserten Ausschnitt des erfindungsgemässen 18-poligen, einphasigen, dauermagneterregten Radialgenerators,

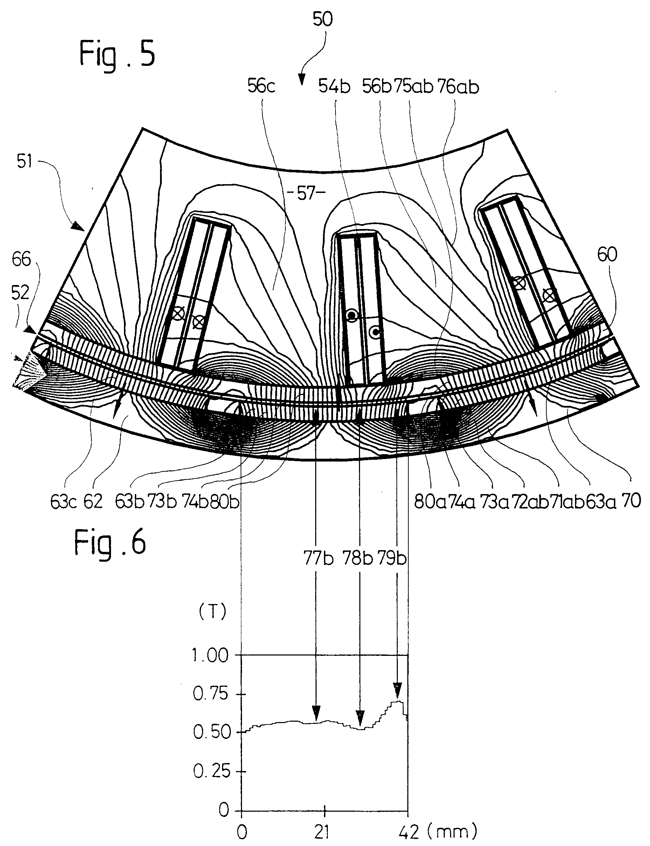

- Figur 5 den Radialgenerator von Figur 4, jedoch einschliesslich der magnetischen Feldlinien für den Betriebsfall,
- Figur 6 den graphischen Verlauf der Flussdichte (Induktion) in einem Dauermagnet des Radialgenerators von Figur 4 und 5,

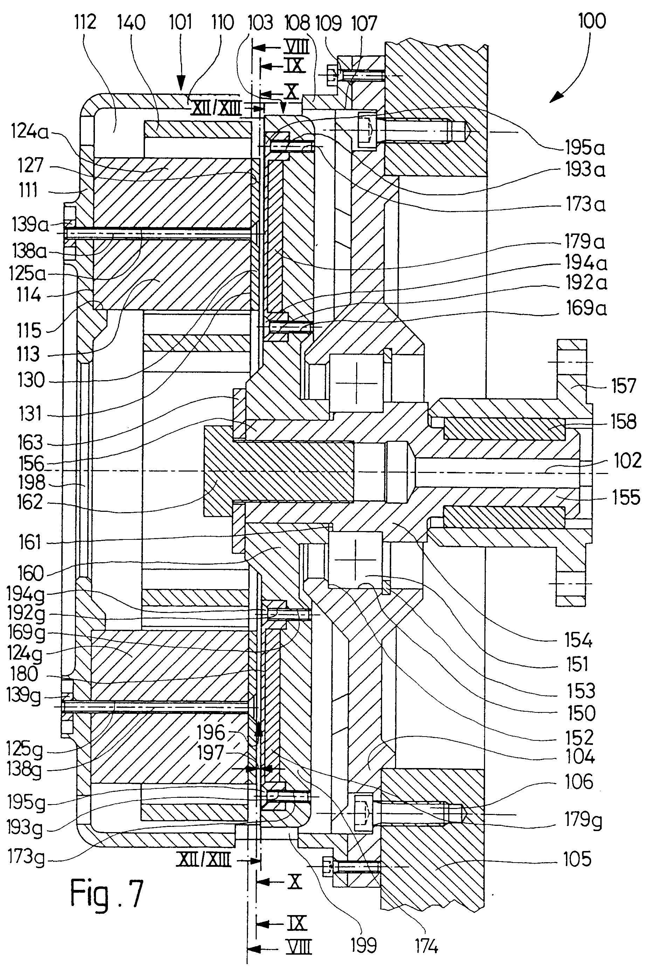

- Figur 7 in verkleinertem Massstab eine Schnittdarstellung des erfindungsgemässen 12-poligen, einphasigen, dauermagneterregten Axialgenerators,

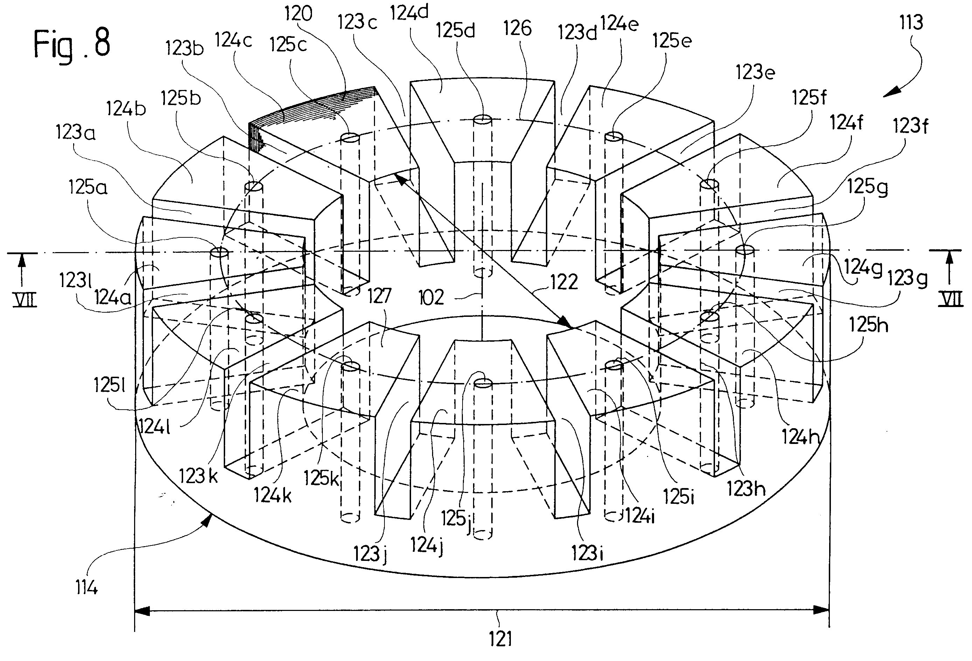

- Figur 8 eine räumliche Darstellung des Statorblechpaketes des Axialgenerators von Figur 7,

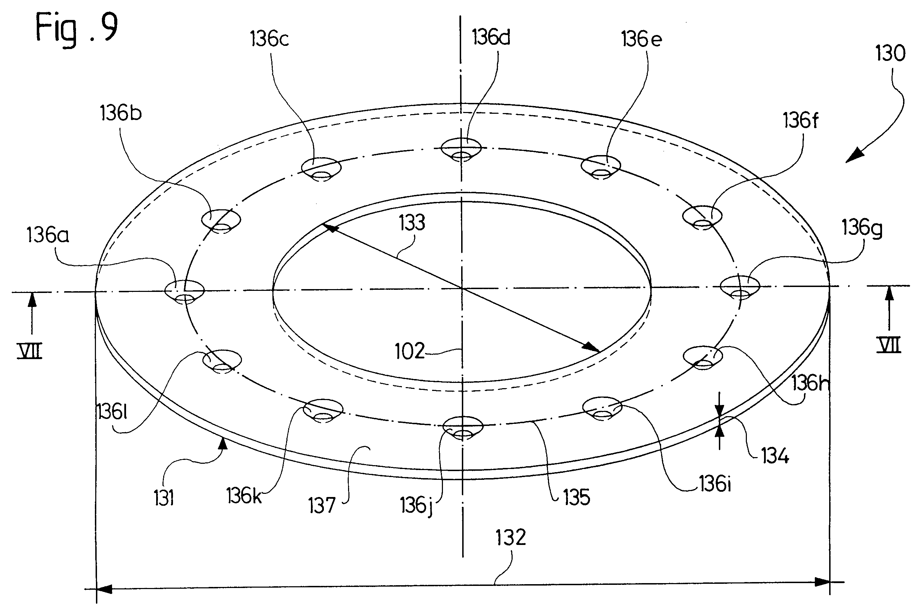

- Figur 9 eine räumliche Darstellung der Zwischenschicht des Axialgenerators von Figur 7,

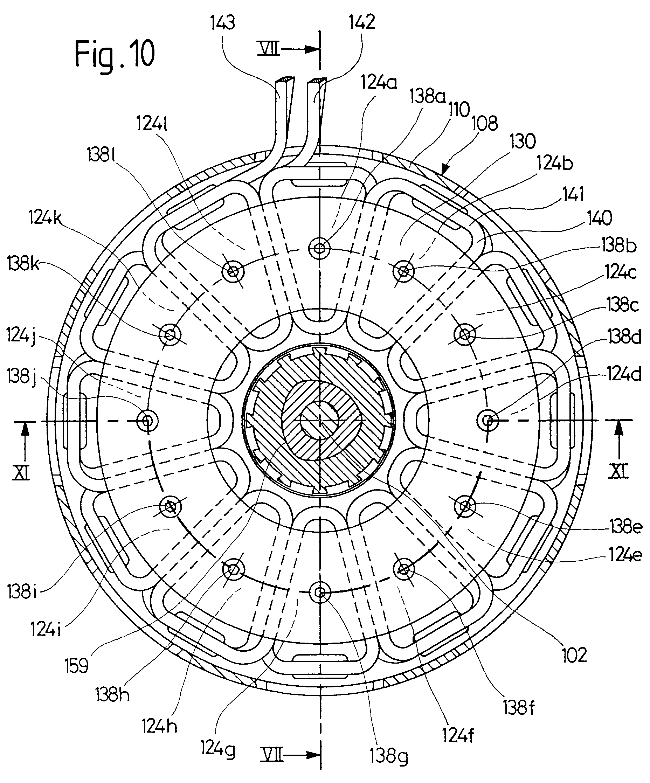

- Figur 10 den Axialgenerator von Figur 7 in Draufsicht nach dem Schnitt X-X in Figur 7,

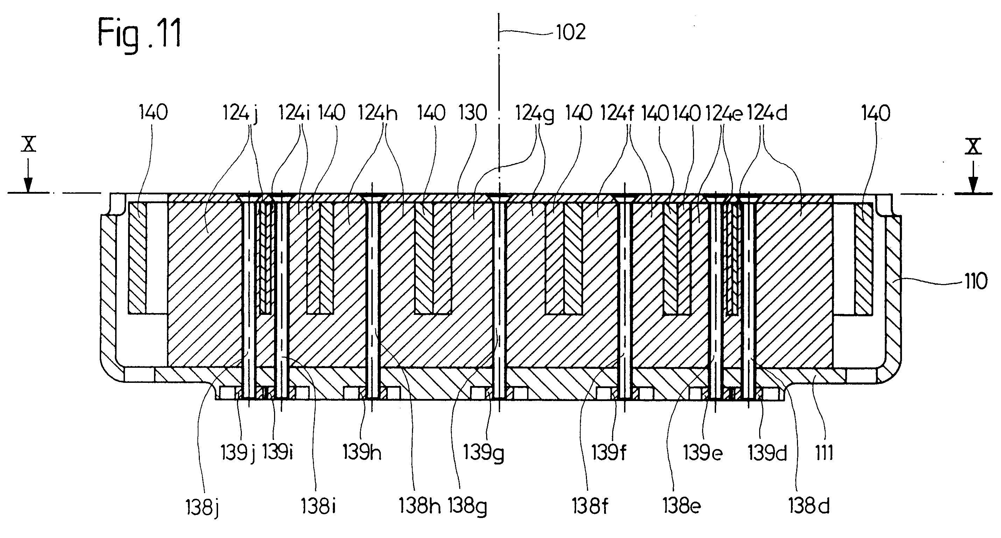

- Figur 11 den Axialgenerator von Figur 7 nach dem Schnitt XI-XI von Figur 10,

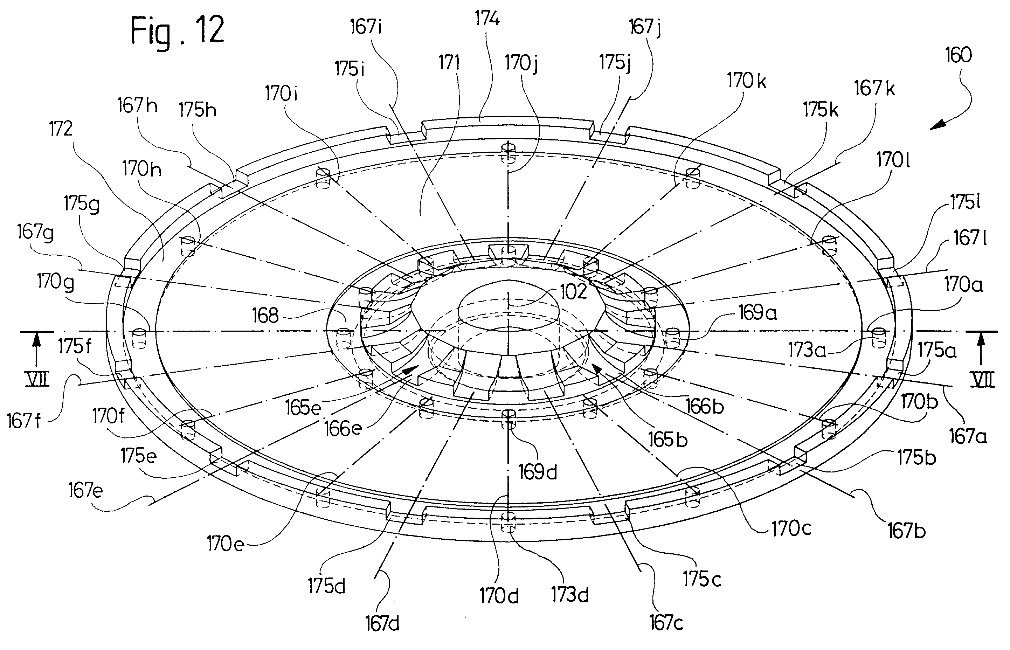

- Figur 12 eine räumliche Darstellung der Dauermagnetensupportscheibe des Axialgenerator von Figur 7 und

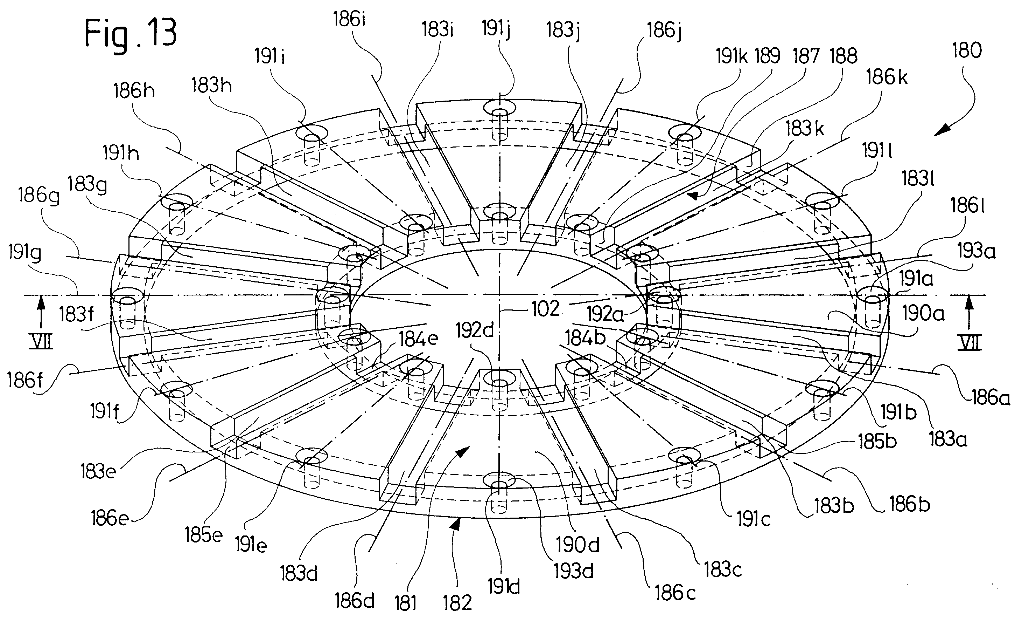

- Figur 13 eine räumliche Darstellung der Kühlluftvertelischeibe des Axialgenerator von Figur 7.

Die Figuren 1 bis 3 sind schon vorgängig beschrieben worden, da sie den Stand der Technik zeigen.

In der Figur 4 ist auf schematische Weise ein vergrösserter Ausschnitt eines erfindungsgemässen 18-poligen, einphasigen, dauermagneterregten Radialgenerators 50 in Schnittdarstellung gezeigt, der einen Stator bzw. Ständer 51 und einen Rotor bzw. Läufer 52 aufweist, wobei die Drehachse ausserhalb der Figur liegt und somit nicht dargestellt ist. Mit 53 ist ein im wesentlichen zylindermantelförmiges, ferromagnetisches Statorblechpaket bezeichnet, welches aus einer Vielzahl von isolierten, lochscheibenförmigen Dynamoblechen besteht. Im Statorblechpaket 53 sind achtzehn in regelmässigen Abständen radial um die Drehachse angeordnete, untereinander identische Nuten 54a-r (54a bis 54r) mit jeweils zwei zueinander parallelen Nutflanken 55a-r (55a bis 55r) ausgebildet. Der in Figur 4 dargestellte Ausschnitt zeigt lediglich drei Nuten 54a-c mit den Nutflanken 55a-c.

Die Nuten 54a-r teilen das Statorblechpaket 53 in achtzehn jeweils dazwischenliegende, sogenannte Statorpole 56a-r (56a bis 56r) auf, von denen in Figur 4 nur deren vier 56a-c dargestellt sind, davon zwei nur teilweise. Die Nuten 54a-r durchdringen das Statorblechpaket 53 nicht vollständig, so dass ein innenliegender zylindermantelförmiger Bereich entsteht, der im folgenden mit 57 bezeichnet und Verbindungsbereich genannt wird, da er die Statorpole 56a-r untereinander magnetisch verbindet.

In den Nuten 54a-r sind annähernd raumfüllend Wicklungen 58 dargestellt, die auf herkömmliche Art auf das Statorblechpaket 53 gewickelt sind. Die Bezugsziffer 58 ist zugunsten der Übersichtlichkeit stellvertretend für alle Nuten 54a-r nur bei der Nute 54a eingetragen. Im peripheren Bereich des Statorblechpaketes 53 gehen die parallelen Nutflanken 55a-r im Gegensatz zu den Figuren 1 und 2 jeweils nicht in einen konischen Nutbereich 19a-r über. Es sind auch keine Nutkeile 20a-r notwendig, da über die Nuten 54a-r bzw. über das Statorblechpaket 53 ein dünn-wandiger Vetroferrit-Hohlzylinder 60 geschoben ist. Dieser Vetroferrit-Hohlzylinder 60 verschliesst die achtzehn Nuten 54a-r, fixiert die darin eingeschlossene Wicklungen 58 und bildet eine gleichmässige, zylindrische Statoroberfläche 61.

Der bezüglich der Drehachse ausserhalb des Stators 51 befindliche Rotor 52 weist einen zylindermantelförmigen Jochring 62 aus ferromagnetischem Material auf, der wie das Statorblechpaket 53 aus mehreren aufeinandergeschichteten, lochscheibenförmigen Blattlagen besteht, oder auch massiv bzw. einstückig aus beispielsweise Stahlguss sein kann. Innenseitig sind am Jochring 62 in regelmässigen Abständen achtzehn untereinander identische, flach ausgeformte Dauermagnete 63a-r (63a bis 63r) aufgeklebt, die jeweils durch diamagnetische Distanzhalteelemente 64a-r (64a bis 64r) voneinander räumlich sowie magnetisch getrennt sind. Die Dauermagnete 63a-r, die jeweils einen Nordpol N und einen Südpol S aufweisen, sind fortlaufend alternierend gepolt. Beispielsweise weist der Nordpol N des Dauermagneten 63a in Bezug auf dei Drehachse nach aussen, der. Südpol S hingegen zum Stator 51 hin. Die Dauermagnete 63a-r bilden zusammen mit den Distanzhalteelementen 64a-r eine zylindrische Rotoroberfläche 65. Wiederum beschränkt sich die Figur 4 auf einen Ausschnitt des Rotors 52 und zeigt nur drei Dauermagnete 63a-c und vier Distanzhalteelemente 64a-d, wobei 64a und 64d nur teilweise dargestellt sind.

Zwischen der Statoroberfläche 61 und der Rotoroberfläche 65 ist ein zylindermantelförmiger Luftspalt 66 vorgesehen, dessen Breite 67 etwa 1mm beträgt, damit eine angemessene magnetische Kopplung bzw. ein angemessener magnetischer Übergangswiderstand zwischen Stator 51 und Rotor 52 entsteht.

Figur 5 zeigt denselben Ausschnitt des Radialgenerators 50 wie Figur 4. Obwohl für Figur 5 dieselben Bezugszeichen gelten, sind darin nur die wichtigsten eingetragen, damit zusätzlich eingezeichnete magnetische, in sich geschlossene Feldlinien 70 deutlicher zum Ausdruck kommen. Die gezeigten Feldlinien 70, deren Dichte proportional zur jeweils lokal auftretenden magnetischen Flussdichte bzw. Induktion sind, entspringen einer auf der Infinite-Elemente-Theorie beruhenden Rechnersimulation. Figur 5 zeigt den Betriebsfall, während welchem der Rotor 52 angetrieben wird und eine Ankerrückwirkung auftritt. Es ist also nicht nur das von den Dauermagenten 63a-r ausgehende Magnetfeld eingezeichnet, sondern die Summe bzw. Überlagerung von diesem und demjenigen der Ankerrückwirkung, wobei entsprechende Feldlinien mit 70 bezeichnet sind. Im folgenden wird im wesentlichen nur auf diejenigen Feldlinien 70 eingegangen, welche von den beiden benachbarten Dauermagneten 63a und 63b ausgehen. Dasselbe gilt selbstverständlich für jeweils alle andern Paare benachbarter Dauermagnete 63b und 63c, 63c und 63d, ..., 63q und 63r, 63r und 63a ebenfalls.

In der in Figur 5 gezeigten relativen Lage des Rotors 52 gegenüber dem Stator 51 befinden sich jeweils zwei der Dauermagnete 63a-r mindestens teilweise in unmittelbarer Nähe zu einem einzigen Statorpol 56a-r, d.h. es liegen beispielsweise dem Statorpol 56b die Dauermagnete 63a und 63b gegenüber. In der gezeigten Lage des Rotors 52 geht von den beiden benachbarten, alternierend gepolten, in Serie wirkenden Dauermagneten 63a und 63b ein gemeinsamer magnetischer Fluss 71ab aus. Dieser Fluss 71ab lässt sich in verschiedene Abschnitte und Zweige aufteilen. Ein erster, kurzer Abschnitt 72ab des Flusses 71ab verläuft rotorseitig im Jochring 62 zwischen den beiden Dauermagneten 63a und 63b. In den Dauermagneten 63a und 63b selbst bildet der Fluss 71ab jeweils einen Abschnitt 73a bzw. 73b und jeweils daran anschliessend im Luftspalt 66 einen Abschnitt 74a bzw. 74b sowie im Vetroferrit-Hohlzylinder 60 einen Abschnitt 80a bzw. 80b. Statorseitig teilt sich der Fluss 71ab im wesentlichen in zwei im Statorblechpaket 53 verlaufende, die Abschnitte 80a und 80b des Flusses im Vetroferrit-Hohlzylinder 60 untereinander verbindende Zweige auf, d.h. in einen kurzen, ausschliesslich im Statorpol 56b verlaufenden Zweig 75ab sowie in einen längeren, auch über den Verbindungsbereich 57, d.h. um die Nut 54b herum und in den Statorpol 56c führenden Zweig 76ab.

Da die Beschreibung des Radialgenerator 50 nicht nur für die Dauermagnete 63a und 63b zutrifft, sondern auch für die übrigen, benachbarten Paare 63b und 63c, 63c und 63d, ..., 63q und 63r, 63r und 63a, sind in analogem Sinn weitere Bezugszeichen definiert, nämlich insgesamt achtzehn magnetische Flüsse 71ab, 71bc, ..., 71qr, 71ra, achtzehn Abschnitte 72ab, 72bc, ..., 72qr, 72ra im Jochring 22, achtzehn Abschnitte 73a-r (73a bis 73r) in den Dauermagneten 63a-r, achtzehn Abschnitte 74a-r (74a bis 74r) im Luftspalt 66, achtzehn Abschnitte 80a-r (80a bis 80r) im Vetroferrit-Hohlzylinder 60 sowie achtzehn Zweige 75ab, 75bc, ..., 75qr, 75ra und achtzehn Zweige 76ab, 76bc, ..., 76qr, 76ra im Statorblechpaket 53.

Im Gegensatz zum konventionellen Radialgenerator 10 ist die Inhomogenität des magnetischen Flusses 71ab innerhalb der Abschnitte 73a und 73b der Dauermagnete 63a und 63b des erfindungsgemässen Radialgenerators 50 wesentlich schwächer ausgeprägt. Die tangential entlang des Luftspaltes 66 beispielsweise im Dauermagneten 63b varierende Flussdichte (Induktion) ist wiederum einerseits der Dichte der Feldlinien 70 im Abschnitt 73b der Figur 5 zu entnehmen, oder wesentlich deutlicher dem graphischen Verlauf der Flussdichte in Funktion der jeweiligen Stelle im Dauermagnet 63b von Figur 6. Analog zum konventionellen Radialgenerator 10 sind auch im Fall des erfindungsgemässen Radialgenerators 50 drei Bereiche des graphischen Verlaufes der Flussdichte mit Bezugszeichen versehen, nämlich ein erster Bereich 77b und ein zweiter Bereich 78b mit einer ungefähr gleichmässigen Flussdichte von etwa 0.5 Tesla sowie ein anschliessender dritter Bereich 79b mit einer grösseren Flussdichte (Induktion) mit einem Maximalwert von etwa 0.7 Tesla. Selbstverständlich sind auch hier wiederum die entsprechenden Bereiche 77a-r (77a bis 77r), 78a-r (78a bis 78r) sowie 79a-r (79a bis 79r) für alle Dauermagnete 63a-r definiert.

In Anbetracht dessen, dass die beiden Radialgeneratoren 10 und 50 abgesehen von den Keilen 20a-r und dem Vetroferrit-Hohlzylinder 60 nahezu identisch sind und jeweils die beiden Bereiche 37b bzw. 77b, 38b bzw. 78b sowie 39b bzw. 79b dieselben Stellen in den Dauermagneten 23a-r bzw. 63a-r betreffen, können die beiden graphischen Verläufe der Flussdichte von Figur 3 und 6 direkt miteinander verglichen werden. Dabei ist auffallend, dass sich die beiden Bereiche 38b und 78b stark unterscheiden. Es ist offensichtlich eine Tatsache, dass die Inhomogenität des Magnetfeldes in den Dauermagneten 23a-r, welche, wie vorgängig erklärt, erstens durch die Nuten 54a-r und ihre Keile 20a-r und zweitens durch die Ankerrückwirkung hervorgerufen wird, deutlich ausgeglichen wird. Der Vetroferrit-Hohlzyinder 60 wirkt also feldhomogenisierend, da er mit einer relativen Permeabilität zwischen 1.5 und 100 bzw. zwischen 1.5 und 20 mittelmässig magnetisch leitend ist. Er wirkt weder magnetisch kurzschliessend, wie es bei einem ferromagnetischen Werkstoff mit einer relativen Permeabilität von beispielsweise 2000 der Fall ist, noch magnetisch hochohmig wie dia- und paramagnetische Stoffe. Dadurch stellt sich der entscheidende Vorteil ein, dass der gleichmässigere bzw. weniger varierende Verlauf der Flussdichte in den Dauermagneten 63a-r schwächere Wirbelströme zur Folge hat, als dies beim konventionellen Radialgenerator 10 der Fall ist. Das wiederum bedeuted, dass der Wirkungsgrad des erfindungsgemässen Radialgenerators 50 besser als derjenige des konventionellen Radialgenerators 10 ist. Ausserdem sind die Wirbelstromverluste im Vetroferrit-Hohlzylinder 60 aufgrund des hohen elektrischen Widerstandes von Ferrit-ähnlichen Werkstoffen ebenfalls gering.

Der Vetroferrit-Hohlzyinder 60 hat darüber hinaus noch einen weiteren Vorteil: Wie aus den Figuren 4 und 5 ersichtlich ist, ist auf Keile 20a-r, wie sie in den Figuren 1 und 2 gezeigt sind, verzichtet worden. Die Nuten 54a-r des erfindungsgemässen Radialgenerators 50 weisen keine konischen Bereiche 19a-r auf, sondern führen direkt an den Vetroferrit-Hohlzylinder 60 heran. Der Vetroferrit-Hohlzyinder 60 schliesst seinerseits die Nuten 54a-r ab und fixiert die durch letztere hindurchführende Wicklungen 58. Damit erfüllt der Vetroferrit-Hohlzylinder 60 die zusätzliche Aufgabe, die Wicklungen 58 in den Nuten 54a-r zu fixieren, so dass auf die Keile 20a-r verzichtet werden kann. Im allgemeinen sind die Keile 20a-r gemäss dem Stand der Technik grösser ausgebildet, als in den Figuren 1 bis 3 gezeigt, und beanspruchen in den Nuten 14a-r mehr Platz, als dies beim wenige Milimeter dicken Vetroferrit-Hohlzylinder 60 der Fall ist. Die erfindungsgemässe Zwischenschicht 60 gewährt also der Wicklung 58 etwas mehr Raum.

Ausserdem ergibt sich der Vorteil, dass die Montage des dünnwandigen Vetroferrit-Hohlzylinders 60 wesentlich einfacher ist als das Einführen einer Vielzahl von Keilen 20a-r, da dieser lediglich über das Statorblechpaket 53 geschoben werden muss. Er kann möglicherweise, jedoch nicht unbedingt, beispielsweise mit dem Statorblechpaket 53 verklebt werden. Es können auch lediglich die von den Wicklungen 58 durchdrungenen Nuten 54a-r mit einer Giessharzmasse ausgegossen werden, wodurch stellenweise auch der Vetroferrit-Hohlzylinder 60 benetzt und somit fixiert wird. An die Fixierung des Vetroferrit-Hohlzylinders 60 werden keine besonderen Anforderungen gestellt, da er vorteilhafterweise auf dem ruhenden Stator 51 angeordnet ist.

Zahlreiche Versuche haben gezeigt, dass dieser homogenisierende Effekt nicht an einen Radialgenerator gebunden ist, sondern grundsätzlich bei allen bewegten elektrischen Maschinen erzeugbar ist, d.h. die besagten Wirbelstromverluste können bei allen Radial-, Axial- und Lineargeneratoren wie -motoren durch eine Zwischenschicht mit einer relativen Permeabilität zwischen 1.5 und etwa 100, insbesondere zwischen 1.5 und 20, deutlich reduziert werden können.

Im folgenden wird als weiteres Ausführungsbeispiel ein erfindungsgemässer Axialgenerator beschrieben:

Die Figuren 7 bis 13 zeigen eine erfindungsgemässe elektrische Maschine, genauer einen Monophasen-Axialgenerator 100, der in Figur 7 im Querschnitt dargestellt ist. Der Axialgenerator 100 weist einen aussenliegenden Stator 101 und einen um eine Drehachse 102 drehbaren, innenliegenden Rotor 103 auf. Da die Figur 7 bezüglich der Drehachse 102 achsensymetrisch ist, sind die Elemente der Einfachheit halber jeweils nur auf einer Seite mit Bezugszeichen versehen.

Im folgenden werden als erstes die Bestandteile des Stators 101 beschrieben:

Der Stator 101 weist eine im Grundriss ringförmige Leichtmetall-Statorbasisscheibe 104 auf, die an ihrer einen Seite an einem nur ansatzweise dargestellten Support 105 eines beliebigen technischen Objektes, wie beispielsweise eines Fahrzeuges oder einer festinstallierten Stromversorgungsanlage anliegt und daran mittels Schrauben 106 befestigt ist. Auf der anderen, gegenüberliegenden Seite der Statorbasisscheibe 104 ist in deren Peripheriebereich ein in Bezug auf die Drehachse 102 konzentrischer Aussenabsatz 107 ausgebildet, der eine darübergesetzte Leichtmetall-Statorgehäuseglocke 108 positioniert, die mittels Schrauben 109 an der Statorbasisscheibe 104 befestigt ist. Die aus einem zylindermantelförmigen Wandbereich 110 und einem kreisringförmigen Deckelbereich 111 bestehende Statorgehäuseglocke 108 definiert zusammen mit der Statorbasisscheibe 104 einen Generatorinnenraum 112. Im Generatorinnenraum 112 liegt ein näherungsweise hohlzylinder- bzw. ringförmiges Statorblechpaket 113 mit seiner scheiben-förmigen Rückseite 114 am Deckelbereich 111 der Stator-gehäuseglocke 108 an, wobei seine Position quer zur Dreh-achse 102 mittels eines im Deckelbereich 111 ausgebildeten, konzentrischen Innenabsatzes 115 definiert ist.

In Figur 8 ist das Statorblechpaket 113 einzeln in räumlicher Darstellung gezeigt. Es besteht aus einem hier nur ansatzweise dargestelltem, isolierten, fortlaufend aufgewickelten Blechstreifen 120 aus beispielsweise Trofoperm N2, weicher zu einer zylindermantelförmigen Einheit mit einem Aussendurchmesser 121 und einem Innendurchmesser 122 zusammengebacken bzw. geklebt worden ist. Anschliessend sind zwölf sternförmig angeordnete, d.h. jeweils um 30° versetzte und in Flucht zur Drehachse 102 hin ausge-richtete, in eine Richtung der Drehachse 102 nicht voll-ständig durch das Statorblechpaket 113 hindurchführende Nuten 123a-l (123a bis 123l) ausgefräst worden. Die Nuten 123a-l weisen parallele Nutflanken auf, auf dessen Bezugs-zeichen zugunsten der Übersichtlichkeit der Figur 8 ver-zichtet worden ist. Jeweils zwischen zwei benachbarten Nuten 123a-l entsteht je ein Statorpol 124a-l (124a bis 124l). Etwa im Zentrum der Statorpole 124a-l ist jeweils ein Durchgangsloch 125a-l (125a bis 125l) vorgesehen, insgesamt also deren zwölf, die im Abstand von 30° auf einer gemeinsamen Umfangslinie 126 angeordnet sind. Das Statorblechpaket 113 weist eine kreisringförmige Stirn-seite 127 auf, welche im Gegensatz zur Rückseite 114 durch die beschriebene Anordnung der Nuten 123a-l zwölfmal unterbrochen ist. Gemäss der Schnittlinie VI-VI von Figur 8 sind in der Figur 7 lediglich die Statorpole 124a und 124g sowie die Durchgangslöcher 125a und 125g sichtbar.

Nach Figur 7 liegt eine Vetroferrit-Scheibe 130 mit kreisringförmigem Grundriss mit ihrer Rückseite 131 flächendeckend auf der Stirnseite 127 des Statorblechpaketes 113 auf. Die Vetroferrit-Scheibe 130 ist in Figur 9 für sich isoliert räumlich dargestellt. Sie weist einen Aussendurchmesser 132 und einen Innendurchmesser 133, wobei ersterer mit dem Aussendurchmesser 121 und zweiterer mit dem Innendurchmesser 122 des Statorblechpaketes 113 von Figur 8 übereinstimmt, sowie eine Dicke 134 von einigen Millimetern, vorzugsweise drei Millimeter auf. In der Vetroferrit-Scheibe 130 sind auf einer um die Drehachse 102 gelegten Umfangslinie 135, welche der Umfangslinie 126 von Figur 8 entspricht, wiederum in regelmässigen Abständen, d.h. alle 30°, insgesamt zwölf konische Durchgangslöcher 136a-l (136a bis 136l) angeordnet, welche sich zur Rückseite 131 hin verjüngen. Die der Rückseite 131 abgewandte Seite wird Stirnseite genannt und mit 137 gekennzeichnet.

Gemäss Figur 7 führen durch die Durchgangslöcher 136a-l der Vetroferrit-Scheibe 130 und die Druchgangslöcher 125a-l des Statorblechpaketes 113 hindurch relativ lang ausgebildete Senkkopfschrauben 138a-l (138a bis 138l), wobei von diesen ingesamt zwölf Stück in Figur 7 nur die Senkkopfschrauben 138a und 138g sichtbar sind. Die nicht gekennzeichneten Innensechskantköpfe der Senkkopfschrauben 138a-l füllen die konischen Durchgangslöcher 136a-l der Vetroferrit-Scheibe 130 in etwa auf, so dass die ebenfalls nicht gekennzeichneten Stirnseiten dieser Senkkopfschrauben 138a-l annähernd bündig zur Stirnseite 137 der Vetroferrit-Scheibe 130 verlaufen. Wie Figur 7 zeigt, führen die Senkkopfschrauben 138a-l ausserdem durch den Deckelbereich 111 der Statorgehäuseglocke 108 hindurch und stehen dort auf der dem Generatorinnenraum 112 abgewandten Seite zur Aufnahme je einer Mutter 139a-l (139a bis 139l) hervor, wobei in Figur 7 wiederum nur die Muttern 139a und 139g dargestellt sind. Die Senkkopfschrauben 138a-l fixieren zusammen mit den Muttern 139a-l die Vetroferrit-Scheibe 130 und das Statorblechpaket 113 auf der Statorgehäuseglocke 108.

Um die Statorpole 124a-l des Statorblechpaketes 113 herum ist eine Monophasen-Statorwicklung 140 angeordnet, die stückweise in den Nuten 123a-l verläuft. Figur 10, welche die Form dieser Statorwicklung 140 besser zeigt, entspricht dem Schnitt IX-IX in Figur 7. Dargestellt ist in Figur 10 unter anderem die Vetroferrit-Scheibe 130 mit den Köpfen der Senkkopfschrauben 138a-l sowie der Wandbereich 110 der Statorgehäuseglocke 108. Die Statorwicklung 140 besteht beispielsweie aus einer Vielzahl von untereinander isolierten Einzeldrähten, die zu einer einzigen Leitereinheit 141 mit einem quadratischen Querschnitt verklebt sind, welcher einen Anfang 142 und ein Ende 143 aufweist. Die Einzeidrähte sind am Anfang 142 und am Ende 143 jeweils miteinander verlötet. Vom Anfang 142 ausgehend führt die Leitereinheit 141 durch die Statorgehäuseglocke 108 hindurch in den Generatorinnenraum 112 und windet sich gemäss Figur 10 in beispielsweise acht Windungen im Gegenuhrzeigersinn von unten nach oben um den ersten Statorpol 124a herum, geht dann zum nächsten Statorpol 124b über, windet sich achtmal im Uhrzeigersin von oben nach unten um diesen usw, bis sie nach der letzten Windung um den Statorpol 124l mit ihrem Ende 143 den Generatorinnenraum 112 verlassend aus der Statorgehäuseglocke 108 heraustritt.

Figur 11 zeigt eine Ansicht gemäss dem Schnitt X-X von Figur 10, woraus ersichtlich ist, dass die Statorwicklung 140 die Nuten 123a-l vollständig auffüllt. Weiter zeigt Figur 11 sowie auch Figur 8, dass die Nuten 123a-l wie erwähnt in einer Richtung der Drehachse 102 nicht vollständig durch das Statorblechpaket 113 hindurchführen.

Im folgenden wird der Rotor 103 des Monophasen-Axialgenerators 100 beschrieben:

Erneut von Figur 7 ausgehend weist die Statorbasisscheibe 104 eine Bohrung 150 auf, in welche ein Kugellager 151 eingesetzt ist, welches durch einen in der Statorbasisscheibe 104 ausgebildeten, konzentischen Absatz 152 und einen Sicherungsring 153 in Richtung der Drehachse 102 unverschiebbar fixiert ist. Durch das Kugellager 151 hindurch führt eine hohl ausgeformte Rotorwelle 154, die ein erstes, äusseres Ende 155, welches sich ausserhalb des Generatorinnenraumes 112 erstreckt und ein zweites, inneres Ende 156, welches sich im Generatorinnenraum 112 befindet, aufweist.

Auf dem äusseren Ende 155 der Rotorwelle 154 ist ein Rotorflansch 157 aufgesetzt, welcher den Anschluss des Rotors 103 des Axialgenerators 100 an einen nicht dargestellten, beispielsweise thermischen Motor oder eine Turbine ermöglicht. Der Rotorflansch 157 ist auf herkömmliche Weise mittels Keilen 158 drehfest mit der Rotorwelle 154 verbunden.

Das innere Ende 156 der Rotorwelle 154 ist beispielsweise nicht rotationssymetrisch ausgebildet, sondern weist eine leicht dreieckige Querschnittsform 159 auf, wie es deutlich aus Figur 10 hervorgeht. Über dieses nicht rotationssymetrische Ende 156 ist wieder bezugnehmend auf Figur 7 formschlüssig und somit drehfest eine Rotorbasisscheibe 160 aus beispielsweise Stahlguss wie GS-60 gesetzt, die einmit einem an der Rotorwelle 154 ausgebildeten Aussenansatz 161 in Anlage kommt. Eine auf der Seite des inneren Endes 156 in die Rotorwelle 154 eingeschraubte Sechskantschraube 162 mit einer Unterlagsscheibe 163 fixiert die Rotorbasisscheibe 160 in Richtung der Drehachse 102 hin.

In der Figur 12 ist die Rotorbasisscheibe 160 einzeln in räumlicher Darstellung wiedergegeben. Um die Drehachse 102 herum sind auf der Rotorbasisscheibe 160 in regelmässigen Abständen, d.h. alle 30° insgesamt zwölf um etwa 90° gebogene Kühlluftansaugbereiche 165a-l (165a bis 165l) angeordnet, die jeweils einen radial nach aussen führenden Kühlluftaustrittsbereich 166a-l (166a bis 166l) mit einem rechteckigen Querschnitt aufweisen. Mit Bezugszeichen sind aus Gründen der Übersichtlichkeit nur die Kühlluftansaugbereiche 165b und 165e sowie die Kühlluftaustrittsbereiche 166b und 166e versehen. Durch die Kühlluftaustrittsbereiche 166a-l verläuft jeweils eine gerade, radial verlaufende Hilfslinie 167a-l (167a bis 167l), die eine erste sternförmige Einheit bilden. Um die Kühlluftaustrittbereiche 166a-l ist eine konzentisch um die Drehachse 102 verlaufende, leicht in die Rotorbasisscheibe 160 eingesenkte, innere Ringnut 168 ausgebildet, in welcher alle 30° ein Innengewinde, d.h. insgesamt zwölf Innengewinde 169a-l (169a bis 169l) eingearbeitet sind, wobei auch hier nur ein Teil der Innengewinde 169a-l, nämlich 169a und 169d, mit Bezugszeichen versehen ist. Die Innengewinde 169a-l befinden sich jeweils ebenfalls auf einer geraden, radial verlaufenden Hilfslinie 170a-l (170a bis 170l), die eine zweite sternförmige Einheit bilden, welche gegenüber der ersten sternförmige Einheit bezüglich der Drehachse 102 um 15° versetzt ist, so dass daraus insgesamt eine regelmassige, sternförmige Struktur von vierundzwanzig Hilfslinien hervorgeht. Um die Ringnut 168 herum ist eine kreisringförmige, ebene Auflagefläche 171 vorgesehen, die ihrerseits von einer wiederum leicht eingesenkten, zweiten Ringnut 172 umgeben ist, in welcher alle 30° ein Innengewinde, d.h. insgesamt zwölf Innengewinde 173a-l (173a bis 173l) angeordnet sind, wovon in der Figur 12 lediglich die Bezugszeichen 173a und 173d eingetragen sind. Die Innengewinde 173a-l und die Innengewinde 169a-l befinden sich jeweils paarweise auf den entsprechenden Hilfslinien 170a-l. Um die zweite Ringnut 172 herum ist eine bastionsartige, die Rotorbasisscheibe 160 peripher begrenzende Ringrippe 174 mit rechteckigem Querschnitt ausgebildet, die axial, d.h. in Richtung der Drehachse 102 hin aus der Rotorbasisscheibe 160 hervorsteht. In dieser Ringrippe 174 ist zwischen jeweils nicht mit einer Bezugszahl versehenen, zinnenartigen Bereichen wiederum alle 30° ein Schlitz 175a-l (175a bis 175l) mit einem rechteckigen Querschnitt, der dem Querschnitt der Kühlluftaustrittsbereiche 166a-l entspricht, angeordnet. Die Schlitze 175a-l befinden sich wie die Kühlluftaustrittbereiche 166a-l jeweils auf den Hilfslinien 167a-l.

In Figur 7 sind von der Rotorbasisscheibe 160 nur die Ringrippe 174, die Innengewinde 169a und 173a, sowie 169g und 173g sichtbar. Weiter ist in der Figur 7 zwischen dem Innengewinde-Paar 169a und 173a ein Dauermagnet 179a und zwischen dem Innengewinde-Paar 169g und 173g ein Dauermagnet 179g dargestellt. Analog dazu weist der Axialgenerator 100 insgesamt zwölf kreisringsektorförmige Dauermagnete 179a-l (179a bis 179l) aus beispielsweise Vacodym 383 HR auf, die regelmässig alle 30° um die Drehäachse 102 herum angeordnet auf der Rotorbasisscheibe 160 aufgeklebt sind.

Auf den Dauermagneten 179a-l ist eine Befestigungsscheibe 180 aufgesetzt, welche einzeln in räumlicher Darstellung in Figur 13 wiedergegeben ist. Sie weist eine Stirnseite 181 und eine Rückseite 182 auf. Um die Drehachse 102 herum sind auf der Befestigungsscheibe 180 in regelmässigen Abständen, d.h. alle 30° insgesamt zwölf radial verlaufende, gerade Kühlluftkanäle 183a-l (183a bis 183l) angeordnet. Die Kühlluftkanäle 183a-l weisen denselben, rechteckigen Querschnitt auf wie die Kühlaustrittsbereiche 166a-l und die Schlitze 175a-l der Rotorbasisscheibe 160. Die Kühlluftkanäle 183a-l weisen innen jeweils einen Kühllufteintrittsbereich 184a-l (184a bis 184l) und aussen jeweils einen Kühlluftaustrittsbereich 185a-l (185a bis 185l) auf. Mit Bezugszeichen sind lediglich die Kühllufeintrittsbereiche 184b und 184e sowie die Kühlluftaustrittsbereiche 185a und 185e versehen. Durch jeden Kühlluftkanal 183a-l verläuft jeweils eine gerade, radial verlaufende Hilfslinie 186a-l (186a bis 186l). Die zwölf Hilfslinien 186a-l entsprechen den in Figur 12 dargestellten Hilfslinien 167a-l, sofern die Befestigungsscheibe 180, wie in Figur 7 gezeigt, in die Rotorbasisscheibe 160 eingesetzt ist. Demnach ergibt sich aus ihnen auch die gleiche erste, sternförmige Einheit. Unterseitig ist die Befestigungsscheibe 180 zwecks Aufnahme der Dauermagnete 179a-l ausgehöhlt, d.h. sie weist unterseitig eine breite, wenig tiefe Ringnut 187 auf, welche eine innere, Ringrippe 188 und eine äussere, die Befestigungsscheibe 180 peripher begrenzende Ringrippe 189 sowie dazwischenliegende, dünne, kreisringsektorförmige Abdeckbereiche 190a-l (190a bis 190l) entstehen lässt. Von diesen insgesamt zwölf Abdeckbereichen 190a-l, sind in der Figur 13 nur deren zwei bezeichnet, d.h. der eine mit 190a und der andere mit 190d. Die Abdeckbereiche 190a-l decken die auf der Rotorbasisscheibe 160 aufgeklebten Dauermagnete 179a-l ab und fixieren sie in radialer und axialer Richtung. Von der Drehachse 102 aus verlaufen jeweils durch die Mitte der Abdeckbereiche 190a-l gerade, radial verlaufende Hilfslinien 191a-l (191a bis 191l), die den in Figur 12 dargestellten Hilfslinien 170a-l entsprechen, sofern die Befestigungsscheibe 180, wie in Figur 7 gezeigt, in die Rotorbasisscheibe 160 eingesetzt ist. Demnach ergibt sich aus ihnen auch die gleiche zweite, sternförmige Einheit. In der inneren Ringrippe 188 sind in Richtung der Drehachse 102 verlaufende und die Hilfslinien 191a-l schneidende Bohrungen 192a-l (192a bis 192l) vorgesehen, die auf der Stirnseite 181 konisch bzw. angesenkt sind. Analog sind in der äusseren Ringrippe 189 ebenfalls in Richtung der Drehachse 102 verlaufende und die Hilfslinien 191a-l schneidende Bohrungen 193a-l (193a bis 193l) vorgesehen, die auf der Stirnseite 181 konisch bzw. angesenkt sind. Mit Bezugszeichen gekennzeichnet sind in Figur 13 nur die Boh-rungen 192a und 193a sowie die 192d und 193d.

Im Zusammengesetzten Zustand des erfindungsgemässen Axialgenerators 100, wie er im Figur 7 wiedergegeben ist, führen durch die Bohrungen 192a-l und 193a-l jeweils Senkkopfschrauben 194a-l (194a bis 194l) bzw. 195a-l (194a bis 194l). Die Figur 7 zeigt die Bohrungen 192a und 193a, 192g und 193g sowie die Senkkopfschrauben 194a und 195a, 194g und 195g. Die aus der Rotorbasisscheibe 160 und der darin eingesetzten Befestigungsscheibe 180 bestehenden Einheit weist zwölf radiale Kühlluftkanäle auf, die jeweils aus den Abschnitten Kühlluftansaugbereich 165a-l, Kühlluftaustrittsbereich 166a-l, Kühllufteintrittsbereich 184a-l, Kühlluftaustrittsbereich 185a-l und den Schlitzen 175a-l bestehen. Zwischen der Vetroferrit-Scheibe 130 und dem Rotor 103, genauer der Befestigungsscheibe 180 mit ihren Dauermagneten 179a-l, ist ein Luftspalt 196 mit einer Luftspaltbreite 197 von etwa einem Milimeter vorhanden, wobei letztere in Abhängigkeit der Dicke 134 der Vetroferrit-Scheibe steht, wie es vorgängig beim Radialgenerator 50 erklärt wurde.

Die vorgängig beschriebenen und in den Figuren 12 und 13 gezeigten Scheiben 160 und 180 ermöglichen eine ausgezeichnete Kühlung des Axialgenerators 100. Die Kühlluft tritt im Bereich der Drehachse 102 durch eine in der Statorgehäuseglocke 108 vorgesehene, konzentisch zur Drehachse 102 angeordnete Kühllufteintrittsöffnung 198 in den Generatorinnenraum 112 und wird dabei bei Rotation des Rotors 103 durch die Zentrifugalkraft vom Bereich der Drehachse 102 aus radial durch die Kühlluftkanäle 183a-l nach aussen geschleudert und verlässt den Generatorinnenraum 112 durch radial in der Statorgehäuseglocke 108 angeordnete Austrittsöffnungen 199.

Zwischen dem Anfang 142 und dem Ende 143 der Monophasen-Statorwicklung 140 entsteht beim Fremdantrieb der Rotorwelle 154 eine tourenzahlabhängige, ein- bzw. zweiphasige Wechselspannung.

Die Vetroferrit-Scheibe 130 vermindert die durch die Nuten 123a-l und die Ankerrückwirkung entstehende Magnetfeld-Dichteunterschiede in den Dauermagneten 179a-l, d.h. sie homogeniersiert das Magnetfeld in den Dauermagnenten 179a-l, um dem dort auftretenden Effekt der Wirbelstrombildung entgegenzutreten, wie es schon ausführlich im Falle des erfindungsgemässen Radialgenerators 50 beschrieben worden ist. Im allgemeinen treffen alle dort festgehaltenen Tatsachen, insbesondere die Vorteile, auch für den Axialgenerator 100 zu.

Im Falle des Axialgenerators 100 nimmt die Zone aus einem Werkstoff mit einer relativen Permeabilität von 1.5 bis 100 (bzw. von 1.5 bis 20) in Form einer dünnen Vetroferrit-Scheibe 130 eine äusserst einfache Gestalt an. Sie ist im Vergleich mit der Vielzahl von Keilen 20a-r in der Herstellung und der Montage wesentlich billiger. Gemäss beispielsweise Figur 7 ist die Vetroferritscheibe 130 mittels Senkkopfschrauben 138a-l auf dem Statorblechpaket 113 befestigt, kann jedoch auch nur aufgeklebt werden, da sie nicht rotiert.

Selbstverständlich ist die erfindungsgemässe Lösung der gestellten Aufgabe nicht an die beiden gezeigten Generatoren 50 und 100 gebunden, sondern für einen beliebigen Generator sowie Motor mit denselben Vorteilen anwendbar.

Beispielsweise können diese Generatoren in einem Hybrid-Fahrzeug mit einem thermischen Motor oder auch im Fall einer bewegbaren oder festinstallierten Station mit einer Turbine eingesetzt werden. Die erfindungsgemässe Lösung betrifft jedoch ausdrücklich auch Motoren, insbesondere DC/DC-Brushlessmotoren. Beispielsweise kann eine von einer Regelelektronik angesteuerte Synchronmaschine als Motor wirken, wie es bereits bestens bekannt ist.

Die erfindungsgemässe Zone kann auch in Form von flachen Platten für Linearmotoren zur Anwendung kommen. Denkbar ist dies zumindest auch für einen Lineargenerator, auch wenn dafür kaum eine Anwendung bekannt ist.

Abschliessend ist zu wiederholen, dass für eine beliebige, rotative elektrischen Maschine eine in der Nähe der Dauermagnete und an den Luftspalt angrenzende Zone aus einem Werkstoff mit einer relativen Permeabilität zwischen 1.5 und 100 im Gegensatz zu Maschinen des Standes der Technik kleinere Wirbelströme in den Dauermagneten auftreten. Dieser Effekt tritt besonders dann ausgeprägt auf, wenn die relative Permeabilität zwischen 1.5 und 20 liegt.

Anstelle von Vetroferrit kann selbstverständlich auch ein anderer Werkstoff gewählt werden. Seine relative Permeabilität sollte jedoch zwischen 1.5 und 100 liegen und sein elektrischer Innenwiderstand sollte zwecks Verminderung von Wirbelströmen in der Zwischenschicht bzw. -zone selbst möglichst gross sein.

## Patentansprüche

1. Elektrische Maschine mit einem Stator (51; 101), einem um eine Drehachse (102) drehbaren Rotor (52; 103) und einem dazwischenliegenden Luftspalt (66; 196) sowie mit Dauermagneten (63a bis 63r; 179a bis 179l) zur Erzeugung eines Erregermagnetfeldes und mindestens einer durch Nuten (54a bis 54r; 123a bis 123l) hindurchführenden Wicklung (58; 140) dadurch gekennzeichnet,
dass in der Nähe der Dauermagnete (63a bis 63r; 179a bis 179l) und an den Luftspalt (66; 196) angrenzend mindestens eine Zone (60; 130) aus einem Werkstoff mit einer relativen Permeabilität zwischen 1.5 und 100 vorgesehen ist und diese Zone (60; 130) von mindestens einem Teil des Erregermagnetfeldes durchdrungen wird.

2. Elektrische Maschine nach Anspruch 1, dadurch gekennzeichnet, dass die Dauermagnete (63a bis 63r; 179a bis 179l) auf dem Rotor (52; 103) angeordnet sind.

3. Elektrische Maschine nach Anspruch 1, dadurch gekennzeichnet, dass die inindestens eine Zone (60; 130) auf dem Stator (51; 101) angeordnet ist.

4. Elektrische Maschine nach Anspruch 3, dadurch gekennzeichnet, dass die mindestens eine Zone (60; 130) die Nuten (54a bis 54r; 123a bis 123l) mindestens teilweise in Richtung zum Rotor (52; 103) hin abschliesst.

5. Elektrische Maschine nach Anspruch 3, dadurch gekennzeichnet, dass als mindestens eine Zone (60; 130) eine den Stator (51; 101) gleichmässig überziehende Schicht vorgesehen ist.

6. Elektrische Maschine nach Anspruch 1, dadurch gekennzeichnet, dass die mindestens eine Zone (60; 130) aus einem Werkstoff mit einer relativen Permeabilität zwischen 1.5 und 20 besteht.

7. Elektrische Maschine nach Anspruch 5, dadurch gekennzeichnet, dass die Schicht (60; 130) als dünnwandiger Hohlzylinder (60) ausgebildet ist.

8. Elektrische Maschine nach Anspruch 5, dadurch gekennzeichnet, dass die Schicht (60; 130) als dünne Scheibe (130) ausgebildet ist.

9. Elektrische Maschine nach Anspruch 5, dadurch gekennzeichnet, dass die Schicht (60; 130) aus einem Ferritähnlichem Werkstoff besteht und nur wenige Millimeter dick ist.

10. Elektrische Maschine nach Anspruch 9, dadurch gekennzeichnet, dass die Schicht (60; 130) aus Vetroferrit oder einem Vetroferrit-ähnlichem Werkstoff besteht.

11. Elektrische Maschine nach Anspruch 1 dadurch gekennzeichnet, dass die elektrische Maschine ein Generator (50; 100) ist.

12. Elektrische Maschine nach Anspruch 1 dadurch gekennzeichnet, dass die elektrische Maschine für ein Fahrzeug vorgesehen ist.

13. Elektrische Maschine nach Anspruch 12 dadurch gekennzeichnet, dass die elektrische Maschine für ein Hybrid-Fahrzeug vorgesehen ist.
